# FASCICULE DE BREVET EUROPEEN

(11) **EP 2 526 842 B1**
(45) Date de publication et mention de la délivrance du brevet: **08.07.2015**
(21) Numéro de dépôt: 12169146.3
(22) Date de dépôt: 23.05.2012
(51) Int. Cl.: A47J 36/06, A47J 43/07

(54) **Couvercle de fermeture d'un récipient de travail d'appareil électroménager de préparation culinaire**
Deckel zum Schließen eines Arbeitsbehälters eines Elektrohaushaltsgeräts zur Zubereitung von Speisen
Lid for closing a working container of a household cooking appliance

(30) Priorité: 26.05.2011 FR 1154616
(43) Date de publication de la demande: 28.11.2012
(73) Titulaire: SEB S.A., 69130 Ecully (FR)
(72) Inventeur: Deshayes, Jean-Louis, 53700 Averton (FR)
(74) Mandataire: Bourrières, Patrice

(56) Documents cités:
- WO-A1-2009/096881
- WO-A1-2011/154647
- FR-A- 1 037 860
- FR-A- 1 568 724
- US-A1- 2003 209 551

## Description

La présente invention se rapporte au domaine technique général des appareils électroménagers de préparation culinaire comportant un récipient de travail et des moyens de chauffage permettant de chauffer le contenu du récipient de travail et se rapporte plus particulièrement à un couvercle de fermeture destiné à équiper un tel récipient de travail.

Il est connu, du brevet US 6 123 449, un couvercle anti-éclaboussure pour un récipient de travail d'appareil mélangeur de préparation culinaire comportant une partie transparente en matériau plastique de type Eastar™ appartenant à la famille des copolyesters. Un tel matériau plastique présente l'avantage d'être transparent et de ne pas contenir de Bisphenol A.

Toutefois, un tel couvercle présente l'inconvénient de se déformer lorsque la température des aliments contenus dans le récipient de travail devient importante, par exemple supérieure à 90°C, de sorte qu'un tel couvercle n'est pas adapté pour couvrir un récipient de travail comprenant des moyens de chauffage, pour l'élaboration de soupes par exemple. De plus, un tel couvercle anti-éclaboussure présente l'inconvénient de ne pas permettre une fermeture sensiblement étanche du récipient de travail de sorte qu'il y a un risque important de brulure par la vapeur émise par les aliments chauffés.

Il est connu du document FR 1 037 860 un couvercle de fermeture d'une casserole comportant une partie transparente en verre ou en plastique et un cadre sur sa périphérie pouvant être en matière plastique. Cependant, ce document ne fournit aucun enseignement sur la nature du matériau plastique utilisé pour la partie transparente.

Il est connu du document WO 2009/096881 un couvercle de fermeture d'une casserole comportant une partie transparente en verre et un cadre sur sa périphérie réalisé en matériau métallique. Cependant, ce document ne divulgue pas un couvercle avec une partie transparente en matière plastique et le couvercle présente donc l'inconvénient d'être lourd et coûteux à réaliser.

Aussi, un but de la présente invention est de proposer un couvercle de fermeture d'un récipient de travail d'appareil mélangeur de préparation culinaire remédiant à ces inconvénients et qui soit simple et économique à réaliser.

A cet effet, l'invention se rapporte à un couvercle de fermeture d'un récipient de travail d'appareil mélangeur de préparation culinaire comportant une partie transparente réalisée dans un matériau plastique appartenant à la famille des copolyesters, caractérisé en ce qu'il comporte un cadre de renfort réalisé dans un matériau plastique présentant une plus grande tenue à la chaleur, pour des températures supérieures à 100°C, que le matériau plastique utilisé pour la partie transparente.

Par une plus grande tenue à la chaleur, on entend un matériau plastique conservant une bonne rigidité et ne se déformant pas pour des températures élevées.

Selon une autre caractéristique de l'invention, la partie transparente est surmoulée sur le cadre de renfort.

Une telle caractéristique présente l'avantage d'assurer une excellente tenue de la partie transparente sur le cadre de renfort.

Selon encore une autre caractéristique de l'invention, le couvercle comporte un joint d'étanchéité.

Une telle caractéristique permet la manipulation du récipient de travail en limitant les risques de débordement de son contenu.

Selon une autre caractéristique de l'invention, le cadre de renfort est moulé en plastique à base de téréphtalate de polybutylène PBT, en polyamide ou en polypropylène.

Une telle caractéristique présente l'avantage d'assurer une excellente rigidité du cadre de renfort du couvercle pour des températures supérieures à 120°C.

Selon une autre caractéristique de l'invention, la partie transparente occupe une position centrale sur le couvercle, le cadre de renfort présentant la forme d'une couronne disposée à la périphérie de la partie transparente.

Selon une autre caractéristique de l'invention, le cadre de renfort comporte des moyens de verrouillage permettant l'immobilisation du couvercle sur le récipient de travail.

Selon une autre caractéristique de l'invention, la partie transparente et le cadre de renfort définissent une paroi externe du couvercle, le couvercle comportant une paroi interne, de doublage, réalisée en matériau plastique de la famille des copolyesters.

Une telle caractéristique permet d'obtenir un couvercle assurant une bonne isolation thermique, ce qui permet de limiter les pertes thermiques et d'éviter que la paroi externe du couvercle n'atteigne une température pouvant provoquer des brulures lorsque le récipient de travail est utilisé avec des moyens chauffants.

Selon une autre caractéristique de l'invention, la paroi interne de doublage supporte un joint d'étanchéité et est mobile en rotation par rapport à la paroi externe.

Une telle caractéristique permet le verrouillage du couvercle par rotation sans générer des efforts de cisaillement sur le joint d'étanchéité, ce qui limite les efforts de verrouillage du couvercle et prolonge la durée de vie du joint d'étanchéité.

Selon une autre caractéristique de l'invention, la paroi interne de doublage comporte des pattes de fixation venant s'engager élastiquement sur la paroi externe.

Une telle caractéristique présente l'avantage de permettre un démontage aisé de la paroi de doublage pour son nettoyage.

L'invention concerne également un appareil mélangeur de préparation culinaire comportant un récipient de travail renfermant un outil de mixage et comprenant des moyens de chauffage permettant de chauffer le contenu du récipient de travail, le récipient de travail étant fermé par un couvercle dans lequel le couvercle est tel que précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire équipé d'un couvercle selon un mode particulier de réalisation de l'invention,
- la figure 2 est une vue en perspective du dessus du couvercle de l'appareil de la figure 1, avec le bouchon doseur retiré de l'ouverture,
- la figure 3 est une vue en perspective du dessous du couvercle de la figure 1,
- la figure 4 est une vue en coupe longitudinale du couvercle de la figure 1.

Seuls les éléments nécessaires à la compréhension de l'invention ont été représentés. Pour faciliter la lecture des dessins, les mêmes éléments portent les mêmes références d'une figure à l'autre.

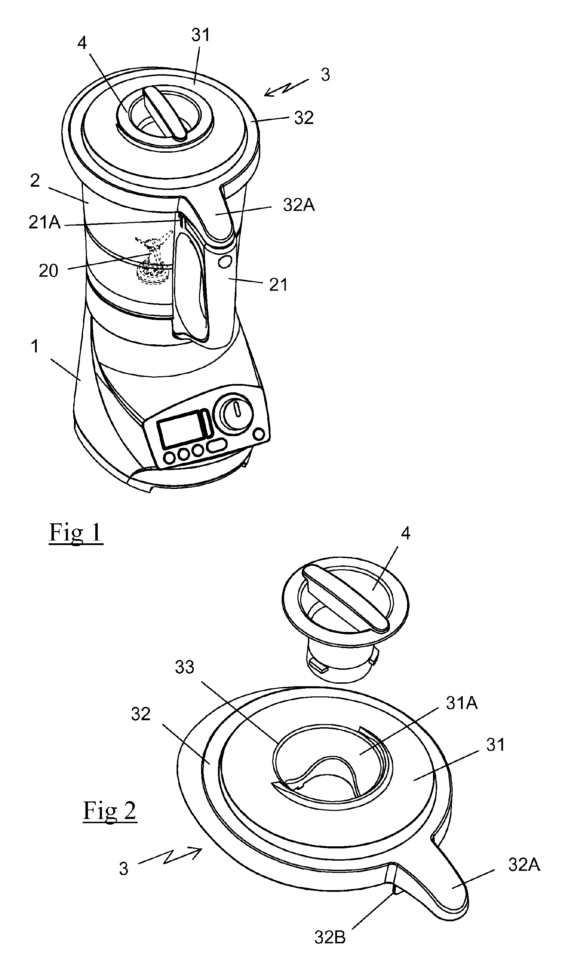

La figure 1 représente un appareil de préparation culinaire, de type blender, comportant un boitier 1 supportant un récipient de travail 2 amovible comprenant une anse 21 latérale et un fond recevant un outil de mixage 20, représenté en pointillé sur cette figure.

L'outil de mixage 20 est entrainé en rotation par un moteur intégré dans le boitier 1 et le fond du récipient de travail 2 est muni d'une résistance chauffante électrique, du type résistance blindée, non représentés sur les figures, permettant de chauffer le contenu du récipient de travail 2.

Conformément à la figure 2, le récipient de travail 2 est fermé par un couvercle 3 amovible comportant une excroissance latérale 32A venant dans le prolongement de l'anse 21 lorsque le couvercle 3 est verrouillé sur le récipient de travail 2, le couvercle 3 comportant avantageusement un logement central en forme d'entonnoir 31A recevant un bouchon doseur 4 amovible, l'entonnoir 31A comportant une extrémité inférieure ouverte donnant un accès direct à l'intérieur du récipient de travail 2.

Plus particulièrement selon l'invention, le couvercle 3 comporte une paroi externe comprenant une partie centrale 31 transparente réalisée en matériau plastique de la famille des copolyesters, tel que du Tritan™ commercialisé par la société Eastman, et un cadre de renfort constitué par une couronne 32 périphérique en matériau plastique présentant une meilleure tenue à la chaleur que le matériau plastique utilisé pour réaliser la partie centrale 31 transparente et en particulier une plus grande rigidité pour des températures supérieures à 100°C.

A titre d'exemple, la couronne 32 est réalisée dans un matériau thermoplastique tel que du PBT (téréphtalate de polybutylène), en polyamide ou en polypropylène.

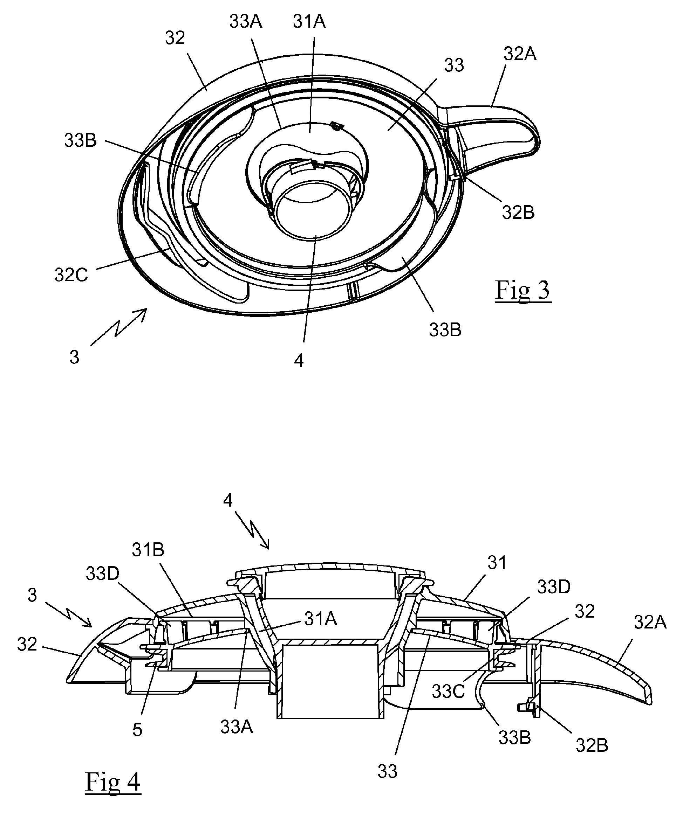

Conformément aux figures 3 et 4, la couronne 32 intègre l'excroissance latérale 32A du couvercle et comporte avantageusement des moyens de verrouillage assurant le verrouillage axial du couvercle 3 sur le récipient de travail 2 lorsque le couvercle est tourné de quelques degrés dans le sens trigonométrique sur le sommet du récipient de travail 2. Ces moyens de verrouillage du couvercle 3 sont, dans l'exemple illustré, constitués par un doigt de verrouillage 32B s'étendant sous l'excroissance latérale 32A et par un pontet de fixation 32C supporté par la couronne 32, à l'opposé de l'excroissance latérale 32A.

Avec le dispositif de fixation ainsi réalisé, le doigt de verrouillage 32B assure un premier point d'immobilisation axial du couvercle 3 en pénétrant à l'intérieur d'une fente latérale 21A de l'anse 21 du récipient de travail, visible sur la figure 1, et le pontet de fixation 32C assure un second point d'immobilisation axial en coopérant avec une languette de verrouillage portée par l'extrémité supérieure du récipient de travail 2, non visible sur les figures, qui vient s'engager sous le pontet de fixation 32C lors de la rotation du couvercle 3.

De manière préférentielle, le couvercle 3 comporte une paroi interne 33, de doublage, constituée par un disque rapporté à l'intérieur du couvercle, cette paroi interne 33 étant réalisée en matériau plastique transparent de la famille des copolyesters, tel que du Tritan™.

La paroi interne 33 comprend un orifice central 33A, circulaire, au travers duquel vient s'engager l'entonnoir 31 A porté par la partie centrale 31 de la paroi externe du couvercle 3, et s'étend radialement jusqu'à la périphérie de la partie centrale 31 en ménageant un espace entre la paroi interne 33 et la partie centrale 31 de la paroi externe, la périphérie de la paroi interne 33 comportant des pattes de fixation 33D qui s'engagent élastiquement dans une rainure 31 B de la face interne de la partie centrale 31. De cette manière, la paroi interne 33 est monté mobile en rotation par rapport à la paroi externe et le bord de l'orifice central 33A repose sur un épaulement porté par la face externe de l'entonnoir 31A de sorte qu'un volume d'air est contenu dans l'espace séparant la paroi interne 33 et la partie centrale 31 de la paroi externe, constituant ainsi une couche isolante limitant le transfert thermique de l'intérieur du récipient de travail 2 vers la paroi externe du couvercle 3.

Afin de faciliter le démontage de la paroi interne 33, par exemple pour effectuer un nettoyage complet du couvercle 3, la paroi interne 33 comporte deux poignées 33B disposées symétriquement par rapport au centre de la paroi interne 33, visibles sur la figure 3, ces deux poignées 33B pouvant être saisies manuellement pour désolidariser la paroi interne 33 de la paroi externe en déformant élastiquement les pattes de fixation 33D.

La paroi interne 33 comporte également une gorge 33C périphérique à l'intérieur de laquelle est disposé un joint d'étanchéité 5 comprenant une lèvre destinée à reposer sur le bord supérieur du récipient de travail 2 lorsque le couvercle 3 est disposé sur le récipient de travail 2, ce joint d'étanchéité 5 empêchant que la vapeur produite à l'intérieur du récipient de travail ne s'échappe par la périphérie du couvercle 3.

Ainsi, lorsque le couvercle 3 est verrouillé sur le récipient de travail 2, la vapeur produite par la cuisson des aliments passe essentiellement par des passages laissés libres au niveau de lobes formés sur la partie inférieure de l'entonnoir 31A de sorte que la vapeur chemine le long du bouchon doseur 4. En conséquence les risques de brulures par la vapeur lorsque l'utilisateur manipule le récipient de travail 2 par son anse 21 sont considérablement réduits.

L'utilisateur peut également toucher la paroi externe du couvercle 3 sans risque de se bruler, la transmission de chaleur de l'intérieur du récipient de travail 2 vers la partie centrale 31 de la paroi externe du couvercle étant fortement réduite par la présence de la paroi interne 33.

Enfin, le couvercle de fermeture ainsi réalisé présente l'avantage de comporter une importante partie transparente, réalisée dans des matériaux ne contenant pas de Bisphenol A, permettant d'avoir une bonne visibilité sur le contenu du récipient et présente l'avantage de posséder une bonne rigidité pour des températures supérieure à 100°C, de sorte que le verrouillage du couvercle reste assuré pour ces températures élevées.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention non représentée, le couvercle pourra être démuni de logement pour un bouchon doseur.

Ainsi, dans une autre variante de réalisation non représentée, le cadre de renfort pourra comporter des traverses s'étendant radialement au couvercle.

## Revendications

1. Couvercle (3) de fermeture d'un récipient de travail (2) d'appareil mélangeur de préparation culinaire comportant une partie transparente (31) réalisée dans un matériau plastique appartenant à la famille des copolyesters, **caractérisé en ce qu'**il comporte un cadre de renfort (32) réalisé dans un matériau plastique présentant une plus grande tenue à la chaleur, pour des températures supérieures à 100°C, que le matériau plastique utilisé pour la partie transparente (31).

2. Couvercle (3) de fermeture selon la revendication 1, **caractérisé en ce que** ladite partie transparente (31) est surmoulée sur le cadre de renfort (32).

3. Couvercle (3) de fermeture selon l'une quelconque des revendications 1 à 2, **caractérisé en ce qu'**il comporte un joint d'étanchéité (5).

4. Couvercle (3) de fermeture selon l'une quelconque des revendications 1 à 3, **caractérisé en ce que** le cadre de renfort (32) est moulé en plastique à base de téréphtalate de polybutylène PBT, en polyamide ou en polypropylène.

5. Couvercle (3) de fermeture selon l'une quelconque des revendications 1 à 4, **caractérisé en ce que** la partie transparente (31) occupe une position centrale sur le couvercle (3), le cadre de renfort (32) présentant la forme d'une couronne disposée à la périphérie de la partie transparente (31).

6. Couvercle (3) de fermeture selon la revendication 5, **caractérisé en ce que** ledit cadre de renfort (32) comporte des moyens de verrouillage (32B, 32C) permettant l'immobilisation du couvercle (3) sur le récipient de travail (2).

7. Couvercle (3) de fermeture selon l'une quelconque des revendications 1 à 6, **caractérisé en ce que** la partie transparente (31) et le cadre de renfort (32) définissent une paroi externe du couvercle et **en ce que** le couvercle (3) comporte une paroi interne (33) de doublage réalisée en matériau plastique de la famille des copolyesters.

8. Couvercle de fermeture selon la revendication 7, **caractérisé en ce que** la paroi interne (33) de doublage supporte un joint d'étanchéité (5) et est mobile en rotation par rapport à la paroi externe.

9. Couvercle de fermeture selon l'une quelconque des revendications 7 à 8, **caractérisé en ce que** la paroi interne (33) de doublage comporte des pattes de fixation (33D) venant s'engager élastiquement sur la paroi externe.

10. Appareil mélangeur de préparation culinaire comportant un récipient de travail (2) renfermant un outil de mixage (20) et comprenant des moyens de chauffage permettant de chauffer le contenu du récipient de travail (2), ledit récipient de travail (2) étant fermé par un couvercle (3), **caractérisé en ce que** ledit couvercle (3) est conforme à l'une des revendications 1 à 9.

## Patentansprüche

1. Verschlussdeckel (3) eines Arbeitsbehälters (2) für ein Mischgerät zur Zubereitung von Speisen mit einem transparenten Teil (31), der aus einem Kunststoff aus der Familie der Copolyester hergestellt ist, **dadurch gekennzeichnet, dass** er einen verstärkenden Rahmen (32) aus einem Kunststoff umfasst, der eine größere Hitzebeständigkeit für Temperaturen über 100 °C aufweist als der für den transparenten Teil (31) verwendete Kunststoff.

2. Verschlussdeckel (3) nach Anspruch 1, **dadurch gekennzeichnet, dass** der genannte transparente Teil (31) auf den verstärkenden Rahmen (32) aufgeformt ist.

3. Verschlussdeckel (3) nach einem der Ansprüche 1 bis 2, **dadurch gekennzeichnet, dass** er einen Dichtungsring (5) umfasst.

4. Verschlussdeckel (3) nach einem der Ansprüche 1 bis 3, **dadurch gekennzeichnet, dass** der verstärkende Rahmen (32) aus Kunststoff auf Basis von Polybutylenterephthalat PBT, aus Polyamid oder aus Polypropylen geformt ist.

5. Verschlussdeckel (3) nach einem der Ansprüche 1 bis 4, **dadurch gekennzeichnet, dass** der transparente Teil (31) eine zentrale Position auf dem Deckel (3) einnimmt, wobei der verstärkende Rahmen (32) die Form eines Kranzes aufweist, der am Umfang des transparenten Teils (31) angeordnet ist.

6. Verschlussdeckel (3) nach Anspruch 5, **dadurch gekennzeichnet, dass** der genannte verstärkende Rahmen (32) Verriegelungsmittel (32B, 32C) umfasst, die die Fixierung des Deckels (3) auf dem Arbeitsgerät (2) gestatten.

7. Verschlussdeckel (3) nach einem der Ansprüche 1 bis 6, **dadurch gekennzeichnet, dass** der transparente Teil (31) und der verstärkende Rahmen (32) eine äußere Wand des Deckels definieren und dass der Deckel (3) eine innere Schalungswand (33) aus Kunststoff aus der Familie der Copolyester umfasst.

8. Verschlussdeckel nach Anspruch 7, **dadurch gekennzeichnet, dass** die innere Schalungswand (33) einen Dichtungsring (5) trägt und gegenüber der äußeren Wand drehbar ist.

9. Verschlussdeckel nach einem der Ansprüche 7 bis 8, **dadurch gekennzeichnet, dass** die innere Schalungswand (33) Befestigungslaschen (33D) aufweist, die elastisch in die äußere Wand einrasten.

10. Mischgerät zur Zubereitung von Nahrungsmitteln, das einen Arbeitsbehälter (2) aufweist, der ein Mischwerkzeug (20) einschließt und Heizmittel umfasst, mit denen sich der Inhalt des Arbeitsbehälters (2) erhitzen lässt, wobei der genannte Arbeitsbehälter (2) durch einen Deckel (3) verschlossen wird, **dadurch gekennzeichnet, dass** der genannte Deckel (3) einem der Ansprüche 1 bis 9 entspricht.

## Claims

1. Lid (3) for closing a working receptacle (2) of a food preparation mixing appliance comprising a transparent portion (31) made of a plastic material belonging to the family of copolyesters, **characterised in that** it comprises a strengthening frame (32) made of a plastic material having a higher heat resistance, for temperatures above 100 °C, than the plastic material used for the transparent portion (31).

2. Lid (3) for closing according to claim 1, **characterised in that** said transparent portion (31) is overmoulded on the strengthening frame (32).

3. Lid (3) for closing according to claim 1 to 2, **characterised in that** it comprises a seal (5).

4. Lid (3) for closing according to any one of claims 1 to 3, **characterised in that** the strengthening frame (32) is moulded from plastic based on polybutylene terephthalate (PBT), polyamide or polypropylene.

5. Lid (3) for closing according to any one of claims 1 to 4, **characterised in that** the transparent portion (31) occupies a central position on the lid (3), the strengthening frame (32) having the shape of a ring arranged on the periphery of the transparent portion (31).

6. Lid (3) for closing according to claim 5, **characterised in that** said strengthening frame (32) comprises locking means (32B, 32C) to immobilise the lid (3) on the working receptacle (2).

7. Lid (3) for closing according to any one of claims 1 to 6, **characterised in that** the transparent portion (31) and the strengthening frame (32) define an outer wall of the lid and **in that** the lid (3) comprises an inner lining wall (33) made of plastic material belonging to the family of copolyesters.

8. Lid for closing according to claim 7, **characterised in that** the inner lining wall (33) comprises a seal (5) and is rotatable relative to the outer wall.

9. Lid for closing according to claim 7 or 8, **characterised in that** the inner lining wall (33) comprises attachment lugs (33D) engaging elastically on the outer wall.

10. Food preparation mixing appliance comprising a working receptacle (2) containing a mixing tool (20) and comprising heating means for heating the contents of the working receptacle (2), said working receptacle (2) being closed by a lid (3), **characterised in that** said lid (3) complies with one of claims 1 to 9.
